# EUROPEAN PATENT APPLICATION

(11) **EP 4 614 628 A1**
(43) Date of publication of application: **10.09.2025**
(21) Application number: 24305340.2
(22) Date of filing: 06.03.2024
(51) Int. Cl.: H01M 4/88, H01M 4/92, H01M 4/86, H01M 8/10

(54) **ANODE CATALYST LAYER FOR A POLYMER ELECTROLYTE MEMBRANE FUEL CELL HAVING LOW HYDROGEN PERIOXIDE PRODUCTION**

(71) Applicant: TOYOTA JIDOSHA KABUSHIKI KAISHA, Aichi-ken 471-8571 (JP)
(72) Inventor: ZANA, Alessandro, 1140 Brussels (BE); COTTE, Stephane, 1140 Brussels (BE)
(74) Representative: Cabinet Beau de Loménie

(57) **Abstract**

The invention concerns a method for making an anode catalyst layer for a polymer electrolyte membrane fuel cell, comprising:
- preparing a powder composition by mixing (a) catalyst particles of carbon-supported platinum or carbon-supported platinum alloy, said catalyst particles having a platinum mass percentage of at least 30%, with (b) filler particles of bare carbon black, wherein a mass percentage of platinum in the powder composition lies in the range 10% to 50%, and wherein a total mass percentage of carbon in the powder composition lies in the range 50% to 90%,
- preparing a suspension by mixing the powder composition with a liquid medium,
- depositing the suspension on a substrate, and
- drying the thus deposited suspension to obtain the anode catalyst layer.

## Description

### BACKGROUND OF THE INVENTION

### 1. Field of the invention

The present disclosure relates to a method for making an anode catalyst layer for a polymer electrolyte membrane fuel cell having a low hydrogen peroxide (H₂O₂) production. The present disclosure also relates to an associated anode catalyst layer and a polymer electrolyte membrane fuel cell comprising such anode catalyst layer.

### 2. Description of Related Art

Polymer electrolyte membrane fuel cells (PEM-FC) are electrochemical devices that convert H₂ and O₂ into electricity. However, crossover of O₂ from the cathode to the anode is detrimental to the polymer electrolyte membrane. Indeed, permeation of O₂ through the polymer electrolyte membrane may form H₂O₂ at the anode. Such H₂O₂ can result in the chemical degradation of the polymer electrolyte membrane and ionomer and cause severe decrease in lifetime and performance loss of the fuel cell.

This chemical degradation can be reduced by incorporating a OH scavenger, such as cerium, in the polymer electrolyte membrane. However, this strategy results in a reduction of proton conductivity of the membrane.

### SUMMARY

The object of the present invention is to at least substantially remedy the above-mentioned drawbacks.

In this respect, the present disclosure relates to a method for making an anode catalyst layer for a polymer electrolyte membrane fuel cell, comprising:
- preparing a powder composition by mixing (a) catalyst particles of carbon-supported platinum or carbon-supported platinum alloy, said catalyst particles having a platinum mass percentage of at least 30%, with (b) filler particles of bare carbon black, wherein a mass percentage of platinum in the powder composition lies in the range 10% to 50%, and wherein a total mass percentage of carbon in the powder composition lies in the range 50% to 90%,
- preparing a suspension by mixing the powder composition with a liquid medium,
- depositing the suspension on a substrate, and
- drying the thus deposited suspension to obtain the anode catalyst layer.

The anode catalyst layer thus formed has a low H₂O₂ production. The present disclosure proposes using platinum on carbon (Pt/C) or platinum alloy on carbon (Pt-M/C) catalyst particles having a high platinum mass percentage (catalyst particles) which have lower H₂O₂ formation than catalyst particles with lower amounts of Pt. To ensure a target Pt loading in the anode catalyst layer, it is necessary to decrease its thickness if the catalyst particles are used in replacement of particles having a lower Pt loading. The inventors however noticed that this direct replacement could result in a too thin anode catalyst layer presenting non-uniformities that is therefore not usable. The disclosure thus proposes to add bare carbon particles (filler particles) to the catalyst particles in a sufficient amount to keep a sufficiently thick anode catalyst layer. The amount of added filler particles depends on the Pt amount of the catalyst particles to ensure the obtaining of a uniform catalyst layer with a target Pt loading, this addition results in the above-described amount ranges for Pt and C in the powder composition. The total mass percentage of carbon includes the mass percentage of carbon from the catalyst particles along with the mass percentage of the filler particles. Low H₂O₂ production decreases the chemical degradation of the polymer membrane and ionomer, thus increasing the lifetime of the fuel cell.

In some embodiments, the catalyst particles have a platinum mass percentage of at least 40%, for example lying in the range 40% to 50%.

In some embodiments, the mass percentage of platinum in the powder composition lies in the range 15% to 30%, and the total mass percentage of carbon in the powder composition lies in the range 70% to 85%.

In some embodiments, the anode catalyst layer presents a platinum surface density lying in the range 0.01 mg/cm² to 0.1 mg/cm².

In some embodiments, a thickness of the anode catalyst layer lies in the range 1 µm to 5 µm.

The present disclosure also relates to an anode catalyst layer for a polymer electrolyte membrane fuel cell, comprising a mixture of (a) catalyst particles of carbon-supported platinum or carbon-supported platinum alloy, said catalyst particles having a platinum mass percentage of at least 30%, with (b) filler particles of bare carbon black, a mass percentage of platinum in the anode catalyst layer lying in the range 10% to 50%, and a total mass percentage of carbon in the anode catalyst layer lying in the range 50% to 90%.

The anode catalyst layer may be intended to be made by the above described method.

In some embodiments, the catalyst particles have a platinum mass percentage of at least 40%, for example lying in the range 40% to 50%.

In some embodiments, the mass percentage of platinum in the anode catalyst layer lies in the range 15% to 30%, and the total mass percentage of carbon in the anode catalyst layer lies in the range 70% to 85%.

In some embodiments, the anode catalyst layer presents a platinum surface density lying in the range 0.01 mg/cm² to 0.1 mg/cm².

In some embodiments, a thickness of the anode catalyst layer lies in the range 1 µm to 5 µm.

The present disclosure also relates to a polymer electrolyte membrane fuel cell, comprising:
- a membrane electrode assembly comprising (a) an anode catalyst layer as described above, (b) a cathode catalyst layer and (c) a polymer electrolyte membrane located between the anode and the cathode catalyst layers,
- a first flow channel configured to feed hydrogen gas to the anode catalyst layer, and
- a second flow channel configured to feed oxygen gas to the cathode catalyst layer.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is a flow chart of a method for making an anode catalyst layer according to an embodiment of the invention;
- FIG.2 shows the principle of mixing the filler particles with the catalyst particles to form an anode catalyst layer according to an embodiment of the invention;
- FIG.3 is a simplified and partial diagram of a polymer electrolyte membrane fuel cell according to an embodiment of the invention;
- FIG. 4 provides photographs comparing the homogeneity of different anode catalyst layers;
- FIG. 5 provides experimental measurements of different anode catalyst layers obtained by Rotating Ring Disk Electrode (RRDE) technique.

### DETAILED DESCRIPTION OF EMBODIMENTS

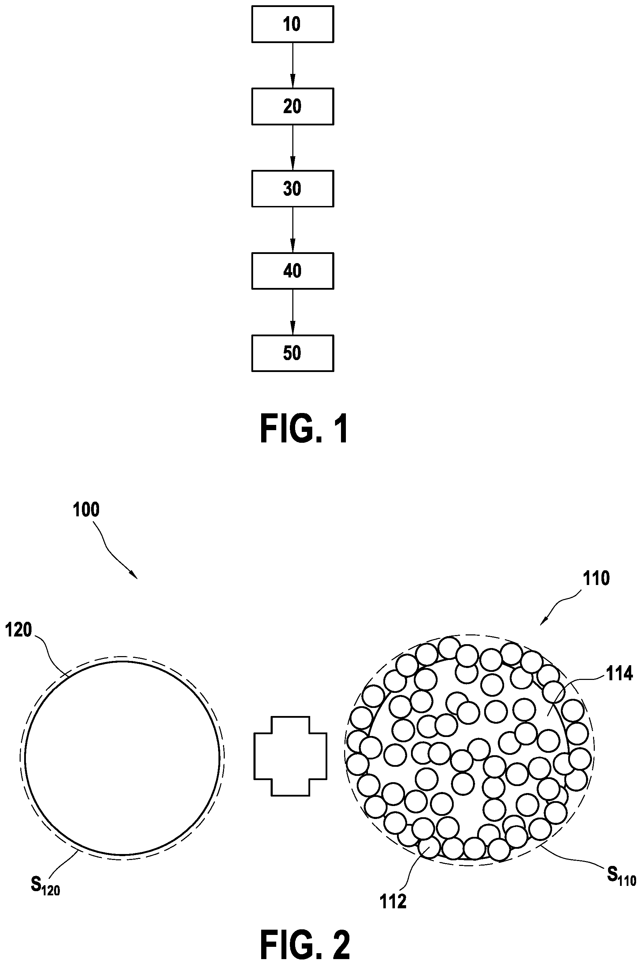

FIG. 1 is a flow chart of a method for making an anode catalyst layer according to an embodiment of the invention.

The method comprises a step 10 of preparing a powder composition which is very schematically represented in FIG. 2. The powder composition 100 is obtained by mixing (a) catalyst particles 110 of carbon-supported platinum or carbon-supported platinum alloy, with (b) filler particles 120 of bare carbon black.

The catalyst particles 110 comprise a platinum or platinum alloy deposit 112 on a carbon support 114. The deposit 112 is in contact with the carbon support 114. The deposit 112 defines an external surface S₁₁₀ of the catalyst particles 110. The deposit 112 may comprise nanoparticles which may have an average size D50 that is less than 10 nm, for example lying in the range 2 nm to 10 nm. The nanoparticles may be separate from each other. The nanoparticles may locally form some agglomerates. When a platinum alloy is used, platinum may be alloyed with one or more of the following elements: cobalt (Co), nickel (Ni), molybdenum (Mo), copper (Cu), lanthanum (La). The carbon support 114 may have an average size D50 greater than or equal to 20 nm, for example lying in the range 20 nm to 1000 nm. The carbon support 114 may be a carbon flake.

The catalyst particles 110 are highly loaded in platinum. The catalyst particles 110 have a platinum mass percentage of at least 30%, for example of at least 40%. The platinum mass percentage of the catalyst particles 110 may lie in the range 30% to 70%, for example 30% to 60%, for example 30% to 50%. The platinum mass percentage of the catalyst particles 110 may lie in the range 40% to 70%, for example 40% to 60%, for example 40% to 50%. Synthetic methods known in the art allow reaching different platinum weight loading % over carbon.

The filler particles 120 are distinct from the catalyst particles 110. In particular, the filler particles 120 are free from platinum, or any metal. The filler particles 120 are formed of uncoated carbon. In particular, the external surface S₁₂₀ of the filler particles 120 is formed of carbon. The average size D50 of the filler particles 120 may lie in the range 100 nm to 600 nm.

The catalyst particles 110 and the filler particles 120 are present in the powder composition 100 in specific amounts. The mass percentage of platinum in the powder composition 100 lies in the range 10% to 50%, for example 15% to 30%. The total mass percentage of carbon in the powder composition 100 (including carbon from the catalyst particles 110 and carbon from the filler particles 120) lies in the range 50% to 90%, for example 70% to 85%. The powder composition 100 may consist essentially of, or consist of, the catalyst particles 110 and the filler particles 120.

In an embodiment where the catalyst particles 110 have a platinum mass percentage lying in the range 40% to 50%, the mass percentage of the catalyst particles 110 in the powder composition 100 may lie in the range 15% to 30%, and the mass percentage of the filler particles 120 in the powder composition 100 may lie in the range 70% to 85%. These ranges remain valid for the anode catalyst layer to be obtained according to this embodiment.

After preparation of the powder composition 100, it is mixed with a liquid medium to form a suspension (step 20 in FIG. 1). The liquid medium may be aqueous. The liquid medium may comprise water, a solvent and an ionomer. The liquid medium is known as such. The suspension may be homogeneized, for example using a planetary mixer.

The suspension is then deposited on a substrate (step 30 in FIG. 1). This deposition may be performed using methods that are known as such, as by casting using e.g. a doctor blade technique. The substrate on which the suspension is deposited may be in sheet form. The substrate may be electrically insulative. The substrate may be polymeric, e.g. in polytetrafluoroethylene (Teflon^{™}).

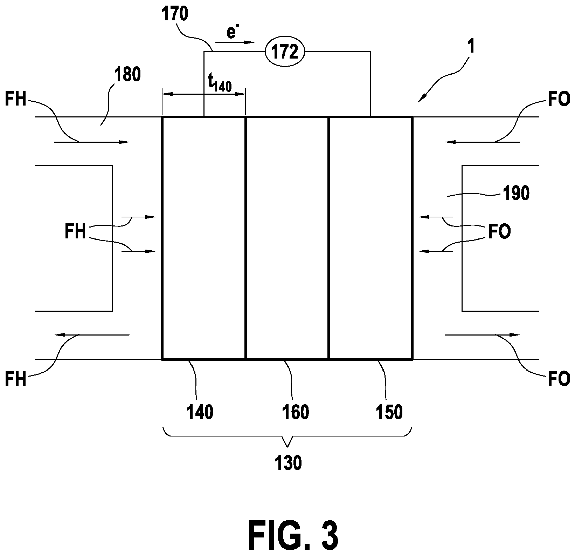

The thus deposited suspension is then dried (step 40 in FIG. 1) to eliminate at least a part of the liquid medium and obtain the anode catalyst layer 140 (see FIG. 3). The binding between particles 110 and 120 may be ensured in the catalyst layer by the ionomer, e.g. a Nafion^{™} ionomer. The anode catalyst layer 140 may present a platinum surface density lying in the range 0.01 mg/cm² to 0.1 mg/cm². The anode catalyst layer 140 may present a thickness t₁₄₀ lying in the range 1 µm to 5 µm.

The anode catalyst layer 140 is then assembled with a cathode and a polymer electrolyte membrane to form a membrane electrode assembly to be included in a polymer electrolyte membrane fuel cell.

FIG. 3 is a schematic diagram of a polymer electrolyte membrane fuel cell 1 according to an embodiment of the invention which includes a membrane electrode assembly 130. The membrane electrode assembly 130 comprises the anode catalyst layer 140, a cathode catalyst layer 150 and a polymer electrolyte membrane 160 located between the layer 140 and the layer 150.

The anode catalyst layer 140 has been made by carrying out steps 10 to 40 described above.

The polymer electrolyte membrane 160 may be a perfluorinated ionexchange membrane, such as of the type commercialized under the reference Nafion^{™}.

The cathode catalyst layer 150 is known as such, it may comprise platinum or platinum alloy nanoparticles (size D50 less than 10 nm) supported on carbon blacks (Pt/C).

An electrical circuit 170 comprising a load 172, intended to be powered by the fuel cell 1, connects the anode catalyst layer 140 to the cathode catalyst layer 150. The fuel cell 1 comprises a first flow channel 180 in communication with a hydrogen (H₂) gas source (not shown). The first flow channel 180 is configured to feed hydrogen gas from the hydrogen gas source to the anode catalyst layer 140. The flow of hydrogen gas is shown by the arrows FH in FIG. 3. The fuel cell 1 also comprises a second flow channel 190, distinct from the first flow channel 180, in communication with a oxygen (O₂) gas source (not shown). The second flow channel 190 is configured to feed oxygen gas from the oxygen gas source to the cathode catalyst layer 150. The flow of oxygen gas is shown by the arrows FO in FIG. 3. The unused oxygen flowing out from the fuel cell comprises water formed during operation.

In operation, hydrogen gas is oxidized to H⁺ and electrons e⁻ at the anode catalyst layer 140. The electrons e⁻ are released in the electrical circuit 170 comprising the load 172 and they reach the cathode catalyst layer 150 where O₂ is reduced to H₂O.

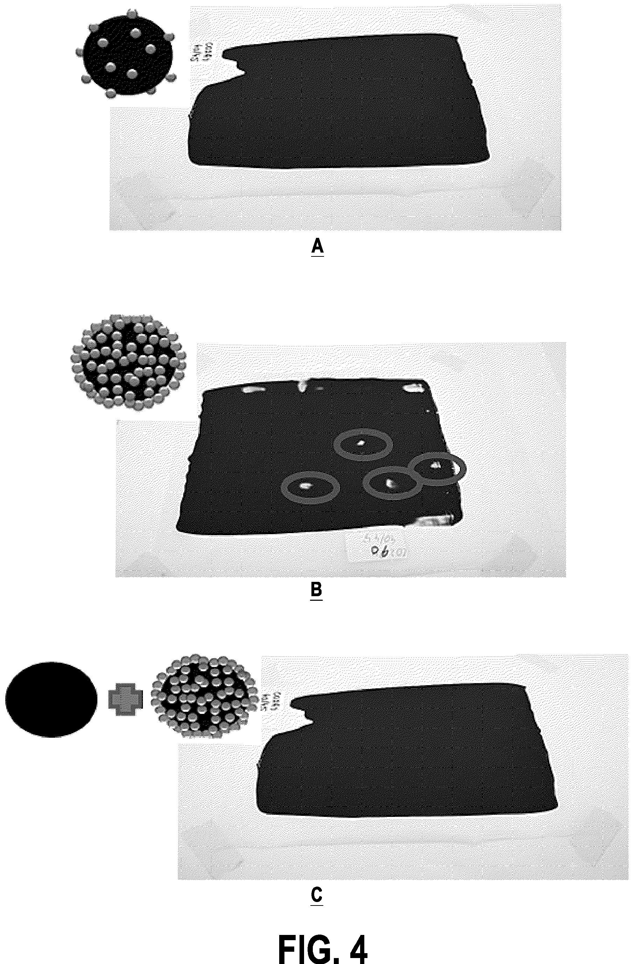

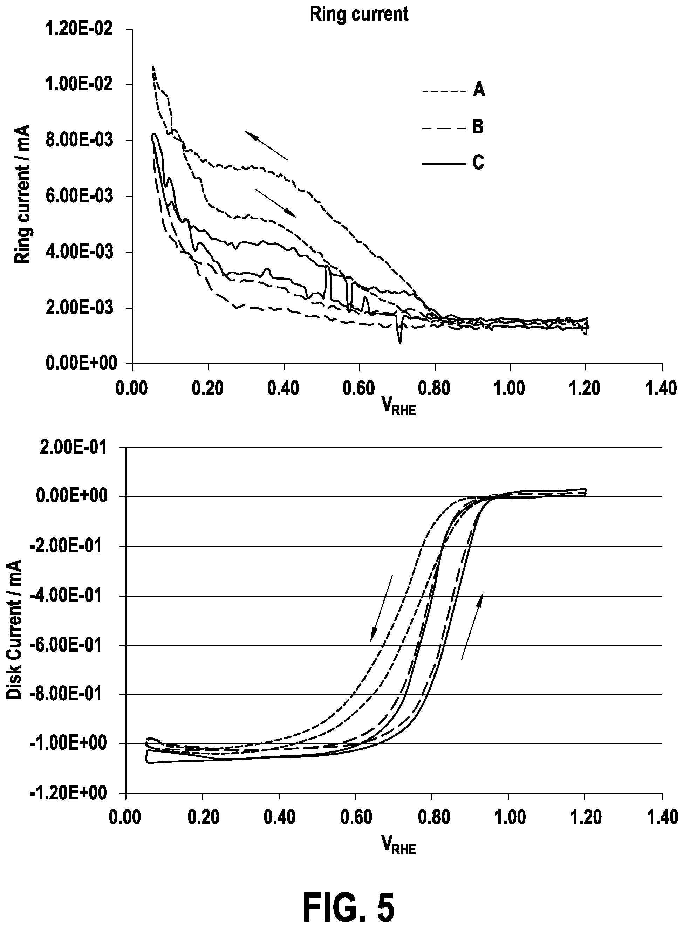

FIG. 4 and FIG. 5 provide results of experiments carried out by the inventors.

All anode catalyst layers shown in FIG. 4 have been made using different powder composition. The powder compositions have been mixed with a same liquid medium and deposited on a Teflon^{™} sheet using doctor blade technique. The thicknesses of the catalyst layers have been adjusted to reach the same desired catalyst loadings in all the samples. The resulting catalyst layers have been dried in a regular oven at 353K for 5 hours.

Photograph A of FIG. 4 shows an anode catalyst layer having a target platinum surface density of less than 0.05 mg/cm² and obtained from catalyst particles of carbon-supported platinum having a platinum mass percentage of 28% (TKK, 28% Pt/C) without using filler particles. The use of this anode catalyst layer is outside the scope of the invention. It is homogeneous but layers formed from such low Pt amount resulted in an undesirable amount of H₂O₂ in operation as reflected in FIG. 5 that will be described below.

Photograph B of FIG. 4 shows an anode catalyst layer having the same target platinum surface density as in photograph A and obtained from catalyst particles of carbon-supported platinum having a platinum mass percentage of 46% (TKK, 46% Pt/C) without using filler particles. The use of this anode catalyst layer is also outside the scope of the invention. To maintain the same platinum loading, the thickness of the catalyst layer was reduced which resulted in a non-usable non-homogeneous coating.

Photograph C of FIG. 4 shows an anode catalyst layer having the same target platinum surface density as in photographs A and B. The anode catalyst layer of photograph C was obtained from a mixture of catalyst particles of carbon-supported platinum having a platinum mass percentage of 46% (TKK, 46% Pt/C) along with filler particles of bare carbon black to result in a total platinum mass percentage in the layer of 20%. The use of this anode catalyst layer is in accordance with the invention. The thus obtained catalyst layer is homogeneous. Layers formed from this mixed powder composition produce a low amount of H₂O₂ as reflected in FIG. 5 that will now be described.

The H₂O₂ yield has been measured by Rotating Ring Disk Electrode (RRDE) technique for three anode catalyst layers made using the powder compositions described in connection with FIG. 4. A first catalyst layer (corresponding to the curves labelled "A" in FIG. 5) and outside the scope of the invention has been made from catalyst particles of carbon-supported platinum having a platinum mass percentage of 28% without using filler particles, a second catalyst layer (corresponding to the curves labelled "B" in FIG. 5) and also outside the scope of the invention has been made from catalyst particles of carbon-supported platinum having a platinum mass percentage of 46% without using filler particles, and a third catalyst layer (corresponding to the curves labelled "C" in FIG. 5) in accordance with the invention has been made from a mixture of catalyst particles of carbon-supported platinum having a platinum mass percentage of 46% along with filler particles of bare carbon black to result in a total platinum mass percentage in the layer of 20%.

The rotating ring-disc electrode (RRDE) is a double working electrode used in hydrodynamic voltammetry, very similar to a rotating disk electrode (RDE). The electrode rotates during experiments inducing a flux of analyte to the electrode. This system is used in electrochemical studies when investigating reaction mechanisms related to redox chemistry and other chemical phenomena.

The catalyst suspensions have been deposited on the primary electrode, by using a film coater. In this step the total amount of Pt on the electrode have been fixed to 1.5µg of Pt per cm⁻² for all the measured samples.

Following the catalyst deposition on the main electrode the H₂O₂ yield has been measured in three electrode compartment electrochemical cell. The electrolyte consisted of 0.1M HClO₄ kept at 25°C under O₂ saturation. The measurements shown in FIG. 5 have been performed at 1600rpm and with a scan rate of 10 mV/s.

As shown in the top graph of FIG. 5, H₂O₂ formation starts at E < 0.8 V_{RHE}. The use of catalyst particles with high Pt amount without filler particles (curves "B") results in half ring current, namely half H₂O₂ produced, in comparison with the use of catalyst particles with low Pt amount (curves "A"). However and as shown in FIG. 4, using catalyst particles with high Pt amount without filler particles may result in fabrication issues (non-uniform coating with holes). The solution according to the invention (curves "C") shows a strong decrease in H₂O₂ production in comparison with curves "A" and solves the aforementioned fabrication issues. FIG. 5 bottom graph relates to oxygen reduction measurements and shows that curve "A" has the lowest oxygen reduction reaction activity. Further data with different scan rate and rotation speed have been made by the inventors and they all show the same trend.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A method for making an anode catalyst layer (140) for a polymer electrolyte membrane fuel cell (1), comprising:
- preparing (10) a powder composition (100) by mixing (a) catalyst particles (110) of carbon-supported platinum or carbon-supported platinum alloy, said catalyst particles having a platinum mass percentage of at least 30%, with (b) filler particles (120) of bare carbon black, wherein a mass percentage of platinum in the powder composition lies in the range 10% to 50%, and wherein a total mass percentage of carbon in the powder composition lies in the range 50% to 90%,
- preparing (20) a suspension by mixing the powder composition with a liquid medium,
- depositing (30) the suspension on a substrate, and
- drying (40) the thus deposited suspension to obtain the anode catalyst layer.

2. A method according to claim 1, wherein the catalyst particles (110) have a platinum mass percentage of at least 40%.

3. A method according to claim 2, wherein the catalyst particles (110) have a platinum mass percentage lying in the range 40% to 50%.

4. A method according to any one of claims 1 to 3, wherein the mass percentage of platinum in the powder composition (100) lies in the range 15% to 30%, and wherein the total mass percentage of carbon in the powder composition lies in the range 70% to 85%.

5. A method according to any one of claims 1 to 4, wherein the anode catalyst layer (140) presents a platinum surface density lying in the range 0.01 mg/cm² to 0.1 mg/cm².

6. A method according to any one of claims 1 to 5, wherein a thickness (t₁₄₀) of the anode catalyst layer (140) lies in the range 1 µm to 5 µm.

7. Anode catalyst layer (140) for a polymer electrolyte membrane fuel cell (1), comprising a mixture of (a) catalyst particles (110) of carbon-supported platinum or carbon-supported platinum alloy, said catalyst particles having a platinum mass percentage of at least 30%, with (b) filler particles (120) of bare carbon black, wherein a mass percentage of platinum in the anode catalyst layer lies in the range 10% to 50%, and wherein a total mass percentage of carbon in the anode catalyst layer lies in the range 50% to 90%.

8. An anode catalyst layer (140) according to claim 7, wherein the catalyst particles (110) have a platinum mass percentage of at least 40%.

9. An anode catalyst layer (140) according to claim 8, wherein the catalyst particles (110) have a platinum mass percentage lying in the range 40% to 50%.

10. An anode catalyst layer (140) according to any one of claims 7 to 9, wherein the mass percentage of platinum in the anode catalyst layer lies in the range 15% to 30%, and wherein the total mass percentage of carbon in the anode catalyst layer lies in the range 70% to 85%.

11. An anode catalyst layer (140) according to any one of claims 7 to 10, wherein the anode catalyst layer presents a platinum surface density lying in the range 0.01 mg/cm² to 0.1 mg/cm².

12. An anode catalyst layer (140) according to any one of claims 7 to 11, wherein a thickness (t₁₄₀) of the anode catalyst layer lies in the range 1 µm to 5 µm.

13. A polymer electrolyte membrane fuel cell (1), comprising:
- a membrane electrode assembly (130) comprising (a) an anode catalyst layer (140) according to any one of claims 7 to 12, (b) a cathode catalyst layer (150) and (c) a polymer electrolyte membrane (160) located between the anode and the cathode catalyst layers,
- a first flow channel (180) configured to feed hydrogen gas (FH) to the anode catalyst layer, and
- a second flow channel (190) configured to feed oxygen gas (FO) to the cathode catalyst layer.

## Amended claims

### Amended claims in accordance with Rule 137(2) EPC.

1. A method for making an anode catalyst layer (140) for a polymer electrolyte membrane fuel cell (1), comprising:
- preparing (10) a powder composition (100) by mixing (a) catalyst particles (110) of carbon-supported platinum or carbon-supported platinum alloy, said catalyst particles having a platinum mass percentage of at least 40%, the catalyst particles comprising a platinum or platinum alloy deposit on a carbon support wherein the carbon support is a carbon flake, with (b) filler particles (120) of bare carbon black, the filler particles being formed of uncoated carbon, wherein a mass percentage of platinum in the powder composition lies in the range 15% to 30%, and wherein a total mass percentage of carbon in the powder composition lies in the range 70% to 85%, the total mass percentage of carbon including the mass percentage of carbon from the catalyst particles along with the mass percentage of the filler particles,
- preparing (20) a suspension by mixing the powder composition with a liquid medium,
- depositing (30) the suspension on a substrate, and
- drying (40) the thus deposited suspension to obtain the anode catalyst layer.

2. A method according to claim 1, wherein the catalyst particles (110) have a platinum mass percentage lying in the range 40% to 50%.

3. A method according to claim 1 or 2, wherein the anode catalyst layer (140) presents a platinum surface density lying in the range 0.01 mg/cm² to 0.1 mg/cm².

4. A method according to any one of claims 1 to 3, wherein a thickness (t₁₄₀) of the anode catalyst layer (140) lies in the range 1 µm to 5 µm.

5. Anode catalyst layer (140) for a polymer electrolyte membrane fuel cell (1), comprising a mixture of (a) catalyst particles (110) of carbon-supported platinum or carbon-supported platinum alloy, said catalyst particles having a platinum mass percentage of at least 40%, the catalyst particles comprising a platinum or platinum alloy deposit on a carbon support wherein the carbon support is a carbon flake, with (b) filler particles (120) of bare carbon black, the filler particles being formed of uncoated carbon, wherein a mass percentage of platinum in the anode catalyst layer lies in the range 15% to 30%, and wherein a total mass percentage of carbon in the anode catalyst layer lies in the range 70% to 85%, the total mass percentage of carbon including the mass percentage of carbon from the catalyst particles along with the mass percentage of the filler particles.

6. An anode catalyst layer (140) according to claim 5, wherein the catalyst particles (110) have a platinum mass percentage lying in the range 40% to 50%.

7. An anode catalyst layer (140) according to claim 5 or 6, wherein the anode catalyst layer presents a platinum surface density lying in the range 0.01 mg/cm² to 0.1 mg/cm².

8. An anode catalyst layer (140) according to any one of claims 5 to 7, wherein a thickness (t₁₄₀) of the anode catalyst layer lies in the range 1 µm to 5 µm.

9. A polymer electrolyte membrane fuel cell (1), comprising:
- a membrane electrode assembly (130) comprising (a) an anode catalyst layer (140) according to any one of claims 5 to 8, (b) a cathode catalyst layer (150) and (c) a polymer electrolyte membrane (160) located between the anode and the cathode catalyst layers,
- a first flow channel (180) configured to feed hydrogen gas (FH) to the anode catalyst layer, and
- a second flow channel (190) configured to feed oxygen gas (FO) to the cathode catalyst layer.
